# EUROPÄISCHE PATENTANMELDUNG

(11) **EP 0 687 717 A1**
(43) Veröffentlichungstag der Anmeldung: **20.12.1995**
(21) Anmeldenummer: 95108555.4
(22) Anmeldetag: 03.06.1995
(51) Int. Cl.: C09D 11/18

(54) **Farbige Metalloxidpigmente enthaltende Kugelschreiberpasten**

(30) Priorität: 14.06.1994 DE 4420644
(71) Anmelder: BASF AKTIENGESELLSCHAFT, D-67056 Ludwigshafen (DE)
(72) Erfinder: Beck, Karin Heidrun, Dr., D-67067 Ludwigshafen (DE); Bellaire, Helmut, D-67069 Ludwigshafen (DE); Kormann, Claudius, Dr., D-67105 Schifferstadt (DE); Dyllick-Brenzinger, Rainer, Dr., D-69469 Weinheim (DE)

(57) **Zusammenfassung**

Kugelschreiberpasten, enthaltend mindestens ein farbiges Metalloxidpigment und für Kugelschreiberpasten übliches Harz und organisches Lösungsmittel als wesentliche Komponenten sowie gewünschtenfalls weitere übliche Zusatzstoffe, sowie ihre Herstellung.

## Beschreibung

Die vorliegende Erfindung betrifft neue Kugelschreiberpasten, enthaltend mindestens ein farbiges Metalloxidpigment und für Kugelschreiberpasten übliches Harz und organisches Lösungsmittel als wesentliche Komponenten sowie gewünschtenfalls weitere übliche Zusatzstoffe.

Weiterhin betrifft die Erfindung die Herstellung dieser Kugelschreiberpasten.

Kugelschreiberpasten bestehen üblicherweise aus Lösungen von Farbstoffen in hochsiedenden Lösungsmitteln, denen zur Verbesserung der Echtheiten und zur Einstellung der erforderlichen Viskosität (in der Regel 7 bis 20 Pa·s) Harze zugesetzt werden, und sind im wesentlichen wasserfrei.

Die bekannten Kugelschreiberpasten vermögen jedoch die Anforderungen in verschiedener Hinsicht nicht zu befriedigen. Insbesondere läßt ihre Dokumentenechtheit oft zu wünschen übrig.

Der Erfindung lag daher die Aufgabe zugrunde, dokumentenechte Kugelschreiberpasten bereitzustellen, die gute Anwendungseigenschaften aufweisen.

Demgemäß wurden die eingangs definierten Kugelschreiberpasten gefunden.

Weiterhin wurde ein Verfahren zur Herstellung der Kugelschreiberpasten gefunden, welches dadurch gekennzeichnet ist, daß man das in Wasser oder organischem Lösungsmittel suspendierte oder als wasser- oder lösungsmittelhaltiger Preßkuchen vorliegende Metalloxidpigment bei erhöhter Temperatur in das Harz einknetet, das Wasser oder das Lösungsmittel anschließend durch weitere Temperaturerhöhung entfernt, die abgekühlte Pigment/Harz-Präparation dann mahlt und in dem für die fertige Kugelschreiberpaste eingesetzten organischen Lösungsmittel löst und dabei gewünschtenfalls weitere Zusatzstoffe zugibt.

Die in den erfindungsgemäßen Kugelschreiberpasten enthaltenen farbigen Metalloxidpigmente haben in der Regel Teilchengrößen von <1 µm, bevorzugt 5 bis 500 nm und besonders bevorzugt 5 bis 100 nm. Ihre spezifische Oberfläche (BET) beträgt in der Regel 3 bis 300 m²/g. Die Teilchengröße wird üblicherweise durch elektronenmikroskopische Aufnahmen oder durch Röntgenbeugung bestimmt.

Sie sind zweckmäßigerweise in Wasser und in organischen Lösungsmitteln unlöslich, d.h. ihre Löslichkeit ist kleiner als 0,5 g/kg lösende Phase.

Beispiele für geeignete Metalloxidpigmente sind neben Braunstein MnO₂ insbesondere Eisenoxide sowohl in reiner als auch in dotierter Form (als Mischphase) geeignet. Im einzelnen seien Eisen(III)oxid Fe₂O₃ und vor allem auch die superparamagnetischen Oxide Magnetit Fe₃O₄ und die in der US-A-4 810 401 beschriebenen Mischoxide der Formel MᵥMn_{w}ZnₓFe_{y}O_{z} (M: Co und/oder Ni; v,w: 0-0,998; x: 0,001-0,998; y: 2,001-2,998; z: 3,001-4; v+w+x: 0,002-0,999; v+w+x+y: 3; v≠0, wenn w=0, und w≠0, wenn v=0), darunter bevorzugt Mn_{0,2}Zn_{0,3}Fe_{2,5}O₄, genannt.

Die Metalloxidpigmente sind bekannt und teilweise im Handel erhältlich oder nach bekannten Methoden herstellbar.

Die erfindungsgemäßen Kugelschreiberpasten enthalten in der Regel 3 bis 30, vorzugsweise 10 bis 15 Gew.-% Metalloxidpigment.

Ein weiterer für die Kugelschreiberpasten wesentlicher Bestandteil ist das Harz, das dazu dient, die gewünschte Viskosität, die im allgemeinen 7 bis 20 Pa·s, bevorzugt 8 bis 15 Pa·s, besonders bevorzugt 10 bis 13 Pa·s, beträgt, einzustellen.

Hier können alle für derartige Anwendungszwecke üblichen Harze zum Einsatz kommen. Beispielhaft seien insbesondere saure Phthalatharze, neutrale Aldehydharze und neutrale Ketonharze, die z.B. unter den Namen Phthalopal®NP (BASF), Kunstharze SK (Hüls) und Alnovol®PN 320 (Hoechst) erhältlich sind, aufgeführt.

Geeignet sind z.B. auch Mischungen von neutralen Harzen, die polare Gruppen wie Hydroxygruppen aufweisen, und 33 bis 66 Gew.-%, bezogen auf die neutralen Harze, saure Harze enthalten, wobei solche Mischungen bevorzugt sind, in denen der neutrale Anteil überwiegt.

Üblicherweise liegt der Harzanteil in den erfindungsgemäßen Kugelschreiberpasten bei 15 bis 45, bevorzugt bei 20 bis 40 Gew.-%.

Für die erfindungsgemäßen Kugelschreiberpasten geeignete organische Lösungsmittel sind ebenfalls für diesen Zweck bekannte Verbindungen. Im einzelnen seien genannt:
- Alkohole: z.B. Tridecanol, Isotridecanol, vor allem Benzylalkohol;
- Etheralkohole: z.B. Glykolether wie 2-Methoxy-, 2-Ethoxy-, 2-Propoxy-, 2-Isopropoxy-, 2-Butoxy-, vor allem 2-Phenoxyethanol, auch 2- und 3-Methoxy-, 2- und 3-Ethoxy-, 2- und 3-Propoxy-, 2- und 3-Isopropoxy-, 2- und 3-Butoxy- und 2- und 3-Phenoxypropanol;
- Diether: z.B. 1,2-Dimethoxy-, 1,2-Diethoxy-, 1,2-Dipropoxy-1,2-Diisopropoxy-, 1,2-Dibutoxy- und 1,2-Diphenoxyethan, 1,2- und 1,3-Dimethoxy-, 1,2- und 1,3-Diethoxy-, 1,2- und 1,3-Dipropoxy-, 1,2- und 1,3-Diisopropoxy- und 1,2- und 1,3-Diphenoxypropan;
- aliphatische Carbonsäuren wie vor allem Olein, d.h. bei der Fettspaltung entstehende technische Ölsäure, die geringe Mengen an Stearinsäure, Palmitinsäure und anderen Fettsäuren enthalten kann;
- aromatische Carbonsäureester: z.B. Phthalsäuredi-(C₄-C₁₃-alkyl)ester wie Dibutyl-, Diisobutyl-, Di-sec.butyl-, Dipentyl-, Diisopentyl-, Dihexyl-, Diheptyl-, vor allem Dioctyl-, Diisooctyl- und Bis(2-ethylhexyl)-, auch Dinonyl-, Diisononyl-, Didecyl-, Diisodecyl-, Diundecyl-, Didodecyl-, Ditridecyl- und Diisotridecylphthalat;
- Kohlenwasserstoffe: z.B. C₅-C₃₀-Chloralkane wie Chloreicosan und Chlortetracosan; C₁-C₂₀-Alkane, die zweifach durch Phenyl substituiert sind, wie Diphenyldecan und Diphenyltetradecan; Di-(C₁-C₁₀-alkyl)naphthaline wie Diisopropylnaphthalin; teilhydrierte Terphenyle.

Selbstverständlich können auch Mischungen dieser Lösungsmittel (z.B. Benzylalkohol/Phenylglykol-Gemische) eingesetzt werden.

In der Regel enthalten die erfindungsgemäßen Kugelschreiberpasten 40 bis 60, vorzugsweise 45 bis 55 Gew.-%, organisches Lösungsmittel.

Weiterhin können den erfindungsgemäßen Kugelschreiberpasten zur Einstellung eines gewünschten Farbtons (insbesondere Schwarz) in organischem Lösungsmittel gelöste organische Farbstoffe oder Farbstoffmischungen zugesetzt werden.

Beispiele für geeignete Farbstoffe sind: Mischungen aus C.I. Solvent Violet 8, C.I. Solvent Blue 4 und C.I. Solvent Black 5, aus C.I. Solvent Violet 8 und C.I. Solvent Blue 64, aus C.I. Solvent Violet 8, C.I. Solvent Blue 4 und C.I. Solvent Red 49 oder Mischungen von Methanilgelbsäure und Kristallviolettbase.

Geeignete Zusätze an diesen Farbstoffen betragen zweckmäßigerweise 1 bis 20 Gew.-%, bezogen auf die fertige Kugelschreiberpaste.

Die neuen Kugelschreiberpasten können vorteilhaft nach dem erfindungsgemäßen Verfahren hergestellt werden, indem das Pigment zunächst in das Harz eingearbeitet wird und die erhaltene Pigment/Harz-Präparation nach einem Zerkleinerungsschritt mit dem organischen Lösungsmittel versetzt wird.

Zweckmäßigerweise geht man dabei wie folgt vor: Man knetet das Harz zunächst allein ca. 10 bis 15 min bei erhöhter Temperatur (etwa 80 bis 100°C) und gibt dann das Metalloxidpigment, suspendiert in Wasser oder einem organischen Lösungsmittel wie einem Alkohol oder als wasser- oder lösungsmittelhaltiger Preßkuchen (in der Regel 60 bis 90 gew.-%ig) vorliegend, innerhalb von etwa 30 min portionsweise zu. Anschließend knetet man das Gemisch ca. 1 bis 2 h bei erhöhter Temperatur (etwa 110 bis 130°C), um die flüssige Phase zu entfernen. Dann knetet man noch einige Zeit (üblicherweise 30 bis 60 min) bei der ursprünglichen Temperatur, um eine gleichmäßige Verteilung des Pigments im Harz zu erreichen.

Nach Abkühlen mahlt man die erstarrte Präparation auf eine mittlere Teilchengröße von etwa 100 bis 200 µm. Hierfür eignet sich z.B. eine Labormühle.

Anschließend löst man das Mahlgut in für Kugelschreiberpasten üblichen organischen Lösungsmitteln und gibt gewünschtenfalls weitere Zusatzstoffe, insbesondere z.B. die oben angesprochenen Farbstofflösungen, zu.

Die erfindungsgemäßen Kugelschreiberpasten zeichnen sich durch vorteilhafte Anwendungseigenschaften, insbesondere ihre Dokumentenechtheit und ihre Lagerstabilität, aus.

### Beispiele

### Herstellung von erfindungsgemäßen Kugelschreiberpasten

### Beispiel 1

225,0 g eines handelsüblichen sauren Phthalatharzes (Säurezahl 80) wurden 15 min bei 90°C geknetet. Dann wurden 58,1 g Magnetit der Teilchengröße 8 bis 25 nm (als 43 gew.-%ige Suspension in Wasser) portionsweise zugegeben. Unter weiterem Kneten wurde die Temperatur 1 h auf 130°C erhöht, um das Wasser zu entfernen. Danach wurde noch 1 h bei 90°C geknetet.

Nach Abkühlen auf Raumtemperatur wurde die erhaltene Präparation 10 min in einer Labormühle gemahlen.

Anschließend wurden 50 g der so erhaltenen Präparation in 50 g einer 2-Phenoxyethanol/Benzylalkohol-Mischung im Gewichtsverhältnis 1:1 gelöst.

Die erhaltene Lösung wurde dann noch mit folgenden Farbstofflösungen vermischt: 0,2 g C.I. Solvent Violet 8 (25 gew.-%ig in Olein), 0,1 g C.I. Solvent Blue 4 (25 gew.-%ig in Olein) und 0,1 g C.I. Solvent Red 49 (20 gew.-%ig in Olein).

Es wurde eine lagerstabile, dokumentenechte, schwarze Kugelschreiberpaste erhalten.

### Beispiel 2

Es wurde analog Beispiel 1 vorgegangen, jedoch wurden zur Nuancierung 0,4 g einer Mischung aus 48 Gew.-% Methanilgelbsäure und 52 Gew.-% Kristallviolettbase zugesetzt.

Auch hier wurde eine dokumentenechte schwarze Kugelschreiberpaste erhalten.

### Beispiel 3

Es wurde analog Beispiel 1 vorgegangen, jedoch wurden 225,0 g eines neutralen Ketonharzes (Säurezahl 0) eingesetzt.

Es wurde eine dokumentenechte schwarze Kugelschreiberpaste erhalten.

### Beispiel 4

Es wurde analog Beispiel 1 vorgegangen, jedoch wurden 225,0 g eines neutralen Aldehydharzes (Säurezahl < 3) eingesetzt.

Es wurde eine dokumentenechte schwarze Kugelschreiberpaste erhalten.

## Patentansprüche

1. Kugelschreiberpasten, enthaltend mindestens ein farbiges Metalloxidpigment und für Kugelschreiberpasten übliches Harz und organisches Lösungsmittel als wesentliche Komponenten sowie gewünschtenfalls weitere übliche Zusatzstoffe.

2. Kugelschreiberpasten nach Anspruch 1, bei denen das Metalloxidpigment Teilchengrößen von < 1 µm hat.

3. Kugelschreiberpasten nach Anspruch 1 oder 2, bei denen das Metalloxidpigment Teilchengrößen von 5 bis 500 nm hat.

4. Kugelschreiberpasten nach den Ansprüchen 1 bis 3, die als Metalloxidpigment Eisenoxide enthalten.

5. Kugelschreiberpasten nach den Ansprüchen 1 bis 4, die als Metalloxidpigment superparamagnetische Eisenoxide enthalten.

6. Kugelschreiberpasten nach den Ansprüchen 1 bis 5, die als Metalloxidpigment Magnetit enthalten.

7. Kugelschreiberpasten nach den Ansprüchen 1 bis 6, die zur Einstellung eines gewünschten Farbtons zusätzlich organische Farbstoffe enthalten.

8. Kugelschreiberpasten nach den Ansprüchen 1 bis 7, die eine Viskosität von 7 bis 20 Pa·s aufweisen.

9. Verfahren zur Herstellung von Kugelschreiberpasten gemäß den Ansprüchen 1 bis 8, dadurch gekennzeichnet, daß man das in Wasser oder organischem Lösungsmittel suspendierte oder als wasser- oder lösungsmittelhaltiger Preßkuchen vorliegende Metalloxidpigment bei erhöhter Temperatur in das Harz einknetet, das Wasser oder das Lösungsmittel anschließend durch weitere Temperaturerhöhung entfernt, die abgekühlte Pigment/Harz-Präparation dann mahlt und in dem für die fertige Kugelschreiberpaste eingesetzten organischen Lösungsmittel löst und dabei gewünschtenfalls weitere Zusatzstoffe zugibt.
